# EUROPEAN PATENT SPECIFICATION

(11) **EP 3 027 350 B1**
(45) Date of publication and mention of the grant of the patent: **04.07.2018**
(21) Application number: 14745146.2
(22) Date of filing: 31.07.2014
(51) Int. Cl.: B23K 35/28, B23K 35/30, C22C 5/06, C22C 5/08, C22C 9/04, C22C 9/05, C22C 30/02, C22C 30/06

(54) **BRAZING ALLOYS**
LOTLEGIERUNGEN
ALLIAGES DE BRASSAGE

(30) Priority: 31.07.2013 EP 13178769; 28.08.2013 DE 202013007623 U; 28.08.2013 DE 202013008126 U; 03.09.2013 DE 102013014528; 03.09.2013 DE 102013015287; 16.09.2013 CN 201310419578; 01.11.2013 DE 202013009641 U
(43) Date of publication of application: 08.06.2016
(73) Proprietor: Umicore AG & Co. KG, 63457 Hanau-Wolfgang (DE)
(72) Inventor: WIEHL, Gunther, 63741 Aschaffenburg (DE); KEMPF, Bernd, 63839 Kleinwallstadt (DE); SCHNEE, Daniel, 63505 Langenselbold (DE); STARCK, Sebastian, 61130 Nidderau-Windecken (DE); RIES, Helmut, 63594 Hasselroth (DE); THIEROLF, Steven, 63486 Bruchköbel (DE)
(74) Representative: Pfenning, Meinig & Partner mbB
(86) International application number: PCT/EP2014/066551
(87) International publication number: WO 2015/014968

(56) References cited:
- EP-A1- 2 756 914
- CN-A- 1 404 957
- CN-A- 102 909 489
- GB-A- 1 532 840
- JP-A- S52 126 659
- US-A- 2 138 637
- TIMMINS P F: "THE DEVELOPMENT OF NONTOXIC AG-BASED BRAZING ALLOYS. ÖNEW NONTOXIC ALLOYS DEMONSTRATE COMMERCIAL VIABILITY THROUGH THEIRABILITY TO PERFORM COMPARABLY WITH ESTABLISHED AG-CU-ZN-CD ALLOYS", WELDING JOURNAL, AMERICAN WELDING SOCIETY, MIAMI, FL, US, vol. 73, no. 9, 1 September 1994 (1994-09-01), pages 31-33, XP000498298, ISSN: 0043-2296
- DATABASE WPI Section Ch, Week 197826 Thomson Scientific, London, GB; Class M, page 23, AN 1978-46583A XP002730236, & JP S53 55442 A1 (EBARA MFG CO LTD) 19 May 1978 (1978-05-19)

## Description

### Technical field

The present invention relates to a brazing filler metal, a sandwich brazing filler metal, Use of the brazing filler metal, and a combination of a brazing filler metal with a flux and a method for joining metal parts by brazing, a brazed article.

### Technical background

Brazing is an important technique for joining components both in series production and for work piece prototyping.

Brazing is an economic procedure, which subjects the materials to low levels of stress, for joining metallic components by means of a metallic additive (the solder), optionally using fluxes and/or inert gas. The melting temperature of the solder is lower than the melting temperatures of the metals which are to be joined and are wetted by the solder without being melted.

Solder materials are classified into soldering filler metals and brazing filler metal depending on the liquidus temperatures thereof, solders having liquidus temperatures of more than 450°C being designated as brazing filler metals and those having liquidus temperatures of less than 450°C being designated as soldering filler metals or soft solders. By way of example, soft solders are used in electronic applications, since excessively high temperatures may damage the components used.

Common brazing filler metals for melting ranges between 600-800°C often are Ag-Cu-Zn brazing filler metals. Such brazing filler metals are described, for example, in standards like DIN EN ISO 17672 and AWS A5.8M/A5.8-2011 (Brazing Filler Metals) and US-A-2019984. Such alloys can be used for several applications, but do not always fulfill all requirements because of higher susceptibility to corrosion and the melting range at a given silver content of the alloys is often desired to be outstanding low.

GB 1532840 shows brazing alloys containing, apart from impurities, 35 to 45 weight % of silver, 18 to 25 weight percent of copper, 25 to 30 weight percent of zinc, 0.1 to 7 weight percent of manganese, 0.1 to 5 weight percent of tin and 0.1 to 7 weight percent of nickel as well as a specific example comprising 41 weight % of silver, 21 weight percent of copper, 27.9 weight percent of zinc, 6 weight percent of manganese, 4 weight percent of tin and 0.1 weight percent of nickel. Such alloys are described to be useful for brazing tungsten carbide tool tips with steel shanks. The alloy can be used as foil.

Timmins, P. F. in "The Development of Nontoxic Ag-Based Brazing Alloys", Welding Journal 1994, 73 (9), 31-33 also teaches a specific example comprising 41 weight % of silver, 21 weight percent of copper, 27.9 weight percent of zinc, 6 weight percent of manganese, 4 weight percent of tin and 0.1 weight percent of nickel and similar alloys.

CN 102 909 489 shows brazing alloys containing 28 to 33 weight % of silver, 18 to 20 weight percent of zinc, 5 to 9.5 weight percent of manganese, 1 to 3 weight percent of tin, 3 to 6.5 weight percent of cobalt and 1 to 8 weight percent of nickel, the balance being copper. These alloys are described to be suitable for fusing hard alloy and steel. It can be used as a band.

CN 1 404 957 shows a brazing alloys containing 21 to 23 weight % of copper, 17 to 21 weight percent of zinc, 1 to 7 weight percent of manganese, 4.5 to 5.5 weight percent of tin and 0.5 to 2 weight percent of nickel, the balance being silver. It teaches its use for brazing a carbide alloy.

JPS-5355442 shows brazing alloys containing 15 to 20 weight % of silver, 35 to 40 weight percent of zinc, 3 to 7 weight percent of manganese, 2 to 5 weight percent of tin and 1 to 3 weight percent of nickel, balance being copper, which is said to have a low liquidus temperature and applicability for a wide range of matrix metals. JPS52-126659 discloses a brazing alloy consisting of Ag 10-30%, Cu 30-55%, Zn 25-50%, and >=1 of Sn 0.5-5%, Mn 0.5-7%, Ni 0.5-5%, P 0.3-5% and Si 0.3-3% used for the brazing of ferrous or nickel base material. This alloy has good fluidity, brazing strength, and workability, without containing Cd. In addition, modified Ag-Cu-Zn brazing filler metals having a higher silver content also containing Nickel (Ni) and Manganese (Mn) are known as well, and are published for example in DE 19725956. Such brazing filler metals are often used in the tool industry. Nickel is added to increase the strength of the brazed joints as well as to improve wetting behaviour on tool steels. However, this results in an increase of the melting range of the alloys.

EP-A-1078711 discloses Ag-Cu-Zn brazing filler metals that may contain little amounts of gallium, indium, tin or manganese. These alloys, however, often lack mechanical properties like ductility and deformability, still exhibit an increased melting range as well as the disadvantages of brazing materials with high silver content.

The object was therefore to provide a brazing filler metal which is easy to produce, has a low melting point at a given silver content, good deformability at ambient temperature (e.g. for cold rolling or cold wire drawing), and has a sufficient ductility in brazed joints and contains no cadmium to be ecologically harmless.

It is well known in the Art that the Ag content of Ag-Cu-X alloys plays a vital role for the liquidus temperature of the alloy due to the eutectic behavior of the binary Ag-Cu system.

Low melting at a given silver content means that a fixed Ag content e.g. 25% results in a significant lower melting temperature (more than 15°C lower) when compared to the standardized alloy from DIN EN ISO 17672 and AWS A5.8M/A5.8-2011 (Brazing Filler Metals) and US-A-2019984. This improvement in Liquidus Temperature at given Ag content can be achieved by wise selection of the other alloying elements.

The object is solved by a brazing filler metal that is free from cadmium and phosphorus, aside from unavoidable impurities, comprising 5 weight percent to 68.4 weight percent copper, from 15.5 weight percent to 24 weight percent silver, from 10 weight percent to 35 weight percent zinc, from 6 weight percent to 19 weight percent manganese, from 0.1 weight percent to 5 weight percent of at least one metal selected from the group consisting of Indium, Gallium, Tin and combinations thereof, and optionally comprising a metal of the group consisting of silicon, antimony, palladium, gold, iridium, rhodium, ruthenium, osmium, platinum, titanium, lithium, germanium, nickel, iron or combinations thereof in an amount of up to 6 weight percent in total of these metals, cobalt being optionally present in an amount of up to 2 weight percent, the balance being copper and unavoidable impurities.

### Short Description of the Invention

1. A brazing filler metal that is free from cadmium and phosphorus, aside from unavoidable impurities, comprising 5 weight percent to 68.4 weight percent copper, from 15.5 weight percent to 24 weight percent silver, from 10 weight percent to 35 weight percent zinc, from 6 weight percent to 19 weight percent manganese, from 0.1 weight percent to 5 weight percent of at least one metal selected from the group consisting of Indium, Gallium, Tin and combinations thereof, and optionally comprising a metal of the group consisting of silicon, antimony, palladium, gold, iridium, rhodium, ruthenium, osmium, platinum, titanium, lithium, germanium, nickel, iron or combinations thereof in an amount of up to 6 weight percent in total of these metals, cobalt being optionally present in an amount of up to 2 weight percent, the balance being copper and unavoidable impurities.
   Mn extends the classical Ag-Cu-Zn system to lower liquidus temperatures at given Ag content. Ag-Cu-Zn-Mn liquidustemperatures are still 20-50°C to high for the desired low liquidus temperatures. Therefore Sn/In/Ga is required to lower the liquidus temperature and allows the competition with Ag-Cu-Zn-Sn alloy family.
2. The brazing filler metal of item 1 comprising 15 weight percent to 25 weight percent of zinc.
   Too high Zn contents embrittle the alloy / to low contents lead to high liquidus temperatures.
3. The brazing filler metal of item 1 or 2 comprising 7 weight percent to 15 weight percent of manganese.
   Too low contents lead to high liquidus temperatures, too high Mn concentrations lead to wetting problems
4. The brazing filler metal of any of items 1 to 3 comprising 15,5 weight percent to 21 weight percent.
   Ag range desired to substitute reach liquidus temperatures between 650-850°C
5. The brazing filler metal of any of items 1 to 4 comprising from 8 weight percent to 19 weight percent of manganese.
6. The brazing filler metal of any of items 1 to 5 comprising 1 weight percent to 4 weight percent of a metal selected from the group consisting of Indium, Gallium, Tin and combinations thereof.
   Sn/In/Ga is required to lower the liquidus temperature and allows the competition with Ag-Cu-Zn-Sn alloy family.
7. The brazing filler metal of any one of items 1 to 6, comprising from 1 to 3 weight percent of a second and/ or third metal selected from the group consisting of Indium, Gallium, Tin and combinations thereof
8. The brazing filler metal of any one of items 1 to 6, comprising from 1 to 5 weight percent, or in an amount of 1 to 4 weight percent, in an amount of 1 to 3 weight percent, in an amount of 1 to 2 weight percent,of Indium, Gallium or combinations thereof, but no tin, except as unavoidable impurity.
9. The brazing filler metal of item 7, the second and/or third metal being contained in an amount of 1 to 2 weight percent.
   Combination like Sn2In1 are beneficial because Liquidus is lowered more effective than just with Sn2 or In1
10. The brazing filler metal of any of items 1 to 8, wherein the unavoidable impurities collectively do not exceed an amount of 0.5 weight percent or 0.3 weight percent.
   Otherwise the properties of the brazing alloy will change too much: eg ductility is lowered by Pb / Bi additions
11. The brazing filler metal of any of items 1 to 9, further comprising a metal of the group consisting of silicon, antimony, palladium, gold, iridium, rhodium, ruthenium, Osmium, platinum, titanium, lithium, germanium, nickel, iron, cobalt or combinations thereof, which metals can optionally be present in an amount of 0.05 weight percent to 6 weight percent in total of these metals. This group has no worse impact on the properties. In contrary it can improve selected properties like wetting on tool steels for example.
12. The brazing filler metal of any of items 1 to 10, further comprising one additional metal of the group consisting of silicon, antimony, titanium, lithium, germanium, nickel, iron or cobalt in an amount of 0.05 weight percent to 6 weight percent.
13. The brazing filler metal of any of items 1 to 12 containing antimony, titanium, iron, nickel or cobalt in an amount of up to 5 weight percent each.
   Antimony can further lower Liquidus / iron, Nickel, cobalt increases the ductility of the alloy and improve the wetting on steels
14. The brazing filler metal of any of items 1 to 13, containing germanium or titanium in an amount of up to 3 weight percent.
   Titanium is an active alloying component that alloys the wetting on "hard to wet" surface like ceramics.
   Germanium is well known to improve the wetting on steels of the alloy.
15. The brazing filler metal of any of items 1 to 14, containing antimony, germanium, lithium, silicon or cobalt in an amount of up to 2 weight percent.
   Lithium and Silicon reduces very efficiently the liquidus temperature of the alloy and silicon especially improves the flowing behavior.
16. The brazing filler metal of any of items 1 to 15, containing silicon or lithium in an amount of up to 1 weight percent.
   Lithium and Silicon reduces very efficiently the liquidus temperature of the alloy and silicon especially improves the flowing behavior. However to high amounts of both elements can lead to embrittlement of the alloy and the brazed joints.
17. The brazing filler metal of any of items 1 to 16, containing copper in an amount of from 5 weight percent to 68.4 weight percent.
18. The brazing filler metal of any of items 1 to 17, containing copper in an amount of from 7 weight percent to 61.5 weight percent.
19. The brazing filler metal of any of items 1 to 18, containing copper in an amount of from 21 weight percent to 68.4 weight percent.
20. The brazing filler metal of any of items 1 to 19, containing copper in an amount of from 34.3 weight percent to 52 weight percent.
21. The brazing filler metal of any of items 1 to 20, containing silicon in an amount of from 0.01 weight percent to 2 weight percent, in particular 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent.
   Silicon reduces very efficiently the liquidus temperature of the alloy and silicon especially improves the flowing behavior.
22. The brazing filler metal of any of items 1 to 21, containing antimony in an amount of from 0.01 weight percent to 5 weight percent, in particular 0.05 weight percent to 2 weight percent; or from 0.05 weight percent to 1 weight percent; or from 0.05 weight percent to 0.5 weight percent; or from 0.05 weight percent to 0.3 weight percent; or from 0.05 weight percent to 0.15 weight percent.
   Antimony can further lower Liquidus, too high amounts embrittle the alloy
23. The brazing filler metal of any of items 1 to 22, containing titanium in an amount of from 0.01 weight percent to 5 weight percent, in particular 0.05 weight percent to 3 weight percent; or from 0.05 weight percent to 1.5 weight percent; or from 0.1 weight percent to 1 weight percent; or from 0.1 weight percent to 0.75 weight percent; or from 0.1 weight percent to 0.5 weight percent; or from 0.1 weight percent to 0.3 weight percent.
   Titanium is an active alloying component that alloys the wetting on "hard to wet" surface like ceramics.
24. The brazing filler metal of any of items 1 to 23, containing lithium in an amount of from 0.001 weight percent to 2 weight percent, in particular 0.01 weight percent to 1 weight percent; or from 0.01 weight percent to 0.8 weight percent; or from 0.01 weight percent to 0.5 weight percent; or from 0.01 weight percent to 0.4 weight percent; or from 0.01 weight percent to 0.2 weight percent.
   Lithium reduces very efficiently the liquidus temperature of the alloy However to high amounts of Lithium can lead to embrittlement of the alloy and the brazed joints.
25. The brazing filler metal of any of items 1 to 24, containing germanium in an amount of from 0.01 weight percent to 3 weight percent, in particular 0.05 weight percent to 2 weight percent; or from 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent.
   Germanium improves the wetting on steels of the alloy.
26. The brazing filler metal of any of items 1 to 25, containing nickel in an amount of from 0.001 weight percent to 7 or from 0.001 weight percent to 6 weight percent, in particular 0.01 weight percent to 5 weight percent; or from 0.05 weight percent to 4 weight percent; or from 0.05 weight percent to 3 weight percent; or from 0.05 weight percent to 2 weight percent; or from 0.1 weight percent to 1 weight percent; or from 0.1 weight percent to 0.5 weight percent.
   Nickel improves the wetting as well as the flowing behavior of the brazing alloy on steels and especially tool steels. Too high amounts increase the liquidus temperature too much.
27. The brazing filler metal of any of items 1 to 26, containing iron in an amount of from 0.001 weight percent to 5 weight percent, in particular 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3 weight percent.
   Iron in small additions increase the ductility of the alloy
28. The brazing filler metal of any of items 1 to 27, containing cobalt in an amount of up to 2 weight percent, in particular 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3.
   Cobalt in small additions increase the ductility of the alloy; Cobalt improves the wetting of the alloy on steels.
29. The brazing filler metal of any of items 1 to 28, containing one or more metals selected from the group consisting of palladium, platinum, ruthenium, osmium, gold, iridium, rhodium, and combinations thereof in an amount of up to 1 weight percent, or in an amount of from 0.001 weight percent to 0.5 weight percent, or 0.01 weight percent to 1 weight percent.
   These elements especially Palladium improve the wetting on steels.
30. A sandwich brazing filler metal, comprising a brazing filler metal according to any of the preceding items.
31. A rod or wire of a brazing filler metal of one or more of the preceding items being coated with a flux.
32. Use of the brazing filler metals according to any of the preceding items for brazing parts made of steel, stainless steels, copper and its alloys (i.e. brass) or nickel and its alloys or combinations thereof to a parent material made of steel, stainless steels, copper and its alloys (i.e. brass) or nickel and its alloys or combinations thereof.
33. Use of the brazing filler metals according to any of the preceding items for brazing nickel-chromium, Copper-Chromium alloys, copper or silver composite materials to parent materials made of brass, copper, steel or combinations thereof.
34. Use of the brazing filler metals according to any of the preceding items for brazing hard metals to steel (especially tool steels), hard metals, diamond or combinations thereof.
35. Use of the brazing filler metals according to any of the preceding items for making hard metal saw blades, milling tools, drill bits, contact materials or medical instruments, heat exchangers, or compressors.
36. A combination of a brazing filler metal according to any of the preceding items with a flux.
37. A combination of item 36, wherein the brazing filler metal is in the shape of a wire or rod.
38. A combination of item 36 or 37, wherein the brazing filler metal is coated with a flux.
39. A combination of one or more of items 36 to 38, the flux being selected from FH10, FH11 or FH12 as defined in standard DIN EN 1045.
40. A method for joining metal parts by brazing, comprising the steps of
   - Providing a parent material;
   - Providing a part that is to be connected to the parent material;
   - Arranging the parent material and the part to one another in a way suitable for brazing;
   - Arranging a brazing filler material of any of items 1 to 30 or a combination of any of items 35 to 38 in contact to the parent material, the part or both in a way suitable for brazing;
   - Heat treating the arrangement at a temperature sufficient to effect brazing to obtain a joined part;
   - Cooling the joined part.
41. A brazed article obtainable according to a method of item 40.

### Short description of the figure

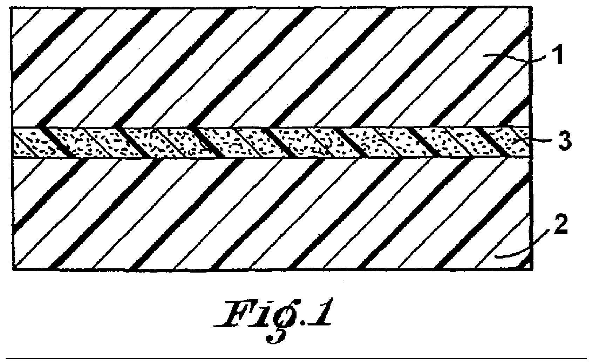

Figure 1 shows a cross section of a sandwich brazing filler exhibiting a metal ribbon 3, a first brazing filler metal 1 and a second brazing filler metal 2 on both sides of the metal ribbon.

### Detailed Description

A content of cadmium and phosphorus is explicitly excluded, aside from unavoidable impurities. Cadmium (Cd) is undesirable in the brazing filler metal due to its toxicity. Phosphorus (P) is not to be used to avoid the formation of brittle intermetallic phases in brazed joints involving iron and iron-based alloys as parent materials. Aluminum can be present as an impurity up to 0.001 weight percent. Phosphorus, magnesium or calcium can be present as impurities up to 0.008 weight percent each. Cadmium, selenium, tellurium, tin, antimony, bismuth and arsenic can be present as impurities up to 0.01 percent by weight each. Lead can be present as an impurity in an amount up to 0.025 weight percent. Sulfur can be present as an impurity as well up to an amount of 0.03 weight percent. Also, silicon and iron can be present as impurities up to 0.05 weight percent each. Unavoidable Impurities can be present in an amount of up to of 0.5 weight percent or 0.3 weight percent or 0.15 weight percent in total.

To avoid misunderstandings, the above alloy composition must contain copper. The copper content normally is 5 weight percent to 68.4 weight percent, or 7 weight percent to 61.5 weight percent, or 21 weight percent to 68.4 weight percent, or 25 weight percent to 55 weight percent or 34.3 weight percent to 52 weight percent.

Silver can also be present in an amount of from 15.5 weight percent to 24 weight percent, or in an amount of 15,5 weight percent to 21 weight percent.

Zinc may also be contained in an amount of from 15 weight percent to 25 weight percent, or in an amount of from 20 weight percent to 25 weight percent.

Manganese can also be present in an amount of from 7 weight percent to 19 weight percent, or from 8 weight percent to 15 weight percent, or from 9 weight percent to 11 weight percent.

The content of the metal(s) selected from the group consisting of indium, gallium, tin and combinations thereof may be 0.1 weight percent to 5 weight percent or 1 weight percent to 4 weight percent. For example, if indium would be present in an amount of 3 weight percent, it would also be possible that gallium is present in an amount of 0.1 weight percent and tin is present in an amount of 1 weight percent. More specifically, if one element is present at an amount of 2 weight percent to 3 weight percent or if two or three of these elements are used, each employed in amounts of 1 weight percent to 2 weight percent have shown to be efficient. Nonetheless, it is also acceptable if the total amount of the metals selected from the group consisting of indium, gallium, tin and combinations thereof does not exceed 5 weight percent.

The brazing filler metal may further comprise a metal of the group consisting of silicon, antimony, palladium, gold, iridium, rhodium, ruthenium, Osmium, platinum, titanium, lithium, germanium, nickel, iron, cobalt or combinations thereof. These metals can optionally be present in an amount of up to 6 weight percent in total of these metals.

In a specific embodiment, one of these metals, in particular selected from the group consisting of silicon, antimony, platinum, titanium, lithium, germanium, nickel, iron or cobalt, are present as an additional (sixth) alloy element to the basic composition of silver, copper, zinc, manganese and usually one of indium, gallium or tin, more specifically in an amount of 0.05 to 6 weight percent.

In addition thereto, one or more elements selected from the group consisting of palladium, gold, iridium, rhodium, ruthenium, Osmium, or combinations thereof may be present, which is of no particular preference.

The brazing filler metal may optionally or mandatory comprise nickel in an amount of up to 6 weight percent, or 0.01 weight percent to 5 weight percent; or from 0.05 weight percent to 4 weight percent; or from 0.05 weight percent to 3 weight percent; or from 0.05 weight percent to 2 weight percent; or from 0.1 weight percent to 1 weight percent; or from 0.1 weight percent to 0.5 weight percent.

The brazing filler metal may optionally or mandatory comprise titanium in an amount of up to 5 weight percent, or from 0.01 weight percent to 5 weight percent, in particular 0.05 weight percent to 3 weight percent; or from 0.05 weight percent to 1.5 weight percent; or from 0.1 weight percent to 1 weight percent; or from 0.1 weight percent to 0.75 weight percent; or from 0.1 weight percent to 0.5 weight percent; or from 0.1 weight percent to 0.3 weight percent.

The brazing filler metal may optionally or mandatory comprise antimony in an amount of up to 5 weight percent, or from 0.01 weight percent to 5 weight percent, or 0.05 weight percent to 2 weight percent; or from 0.05 weight percent to 1 weight percent; or from 0.05 weight percent to 0.5 weight percent; or from 0.05 weight percent to 0.3 weight percent; or from 0.05 weight percent to 0.15 weight percent.

The brazing filler metal may optionally or mandatory comprise iron in an amount of up to 5 weight percent, or in an amount of from 0.001 weight percent to 5 weight percent, or from 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3 weight percent.

The brazing filler metal may optionally or mandatory comprise cobalt in an amount of up to 2 weight percent, or in an amount of from 0.001 weight percent to 5 weight percent, or 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3.

The brazing filler metal may optionally or mandatory comprise germanium in an amount of up to 3 weight percent, or in an amount of from 0.01 weight percent to 3 weight percent, or 0.05 weight percent to 2 weight percent; or from 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent.

The brazing filler metal may optionally or mandatory comprise lithium in an amount of up to 2 weight percent, or in an amount of from 0.001 weight percent to 2 weight percent, or 0.01 weight percent to 1 weight percent; or from 0.01 weight percent to 0.8 weight percent; or from 0.01 weight percent to 0.5 weight percent; or from 0.01 weight percent to 0.4 weight percent; or from 0.01 weight percent to 0.2 weight percent.

The brazing filler metal may optionally or mandatory comprise silicon in an amount of up to 2 weight percent, or in an amount of from 0.01 weight percent to 2 weight percent, or 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent.

These metals can optionally be present in the amounts disclosed here, but obviously must be present in case of the specific embodiment described above wherein one of these metals selected from the group consisting of silicon, antimony, platinum, titanium, lithium, germanium, nickel, iron or cobalt, are present as an additional (sixth) alloy element to the basic composition of silver, copper, zinc, manganese and usually one of indium, gallium or tin.

The brazing filler material may optionally comprise one or more metals selected from the group consisting of palladium, platinum, ruthenium, osmium, gold, iridium, rhodium, and combinations thereof in an amount of up to 1 weight percent, or in an amount of from 0.001 weight percent to 0.5 weight percent, or 0.01 weight percent to 1 weight percent.

Thus, a twenty-fourth specific embodiment relates to a brazing filler metal that is free from cadmium and phosphorus and comprises:
15.5 weight percent to 24 weight percent silver (Ag)
15 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a twenty-fifth specific embodiment relates to a brazing filler metal that is free from cadmium and phosphorus and comprises:
15.5 weight percent to 24 weight percent silver (Ag)
20 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 15.5 weight percent to 24 weight percent, the manganese content is more than 8 weight percent, and the percentages of all components adding up to 100 weight percent;
   Or
a twenty-sixth specific embodiment relates to a brazing filler metal that is free from cadmium and phosphorus and comprises:
15.5 weight percent to 24 weight percent silver (Ag)
10 weight percent to 35 weight percent zinc (Zn)
9 weight percent to 12 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a twenty-seventh specific embodiment relates to a brazing filler metal that is free from cadmium and phosphorus and comprises:
15.5 weight percent to 24 weight percent silver (Ag)
10 weight percent to 35 weight percent zinc (Zn)
6 weight percent to 19 weight percent manganese (Mn)
1 weight percent to 4 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a twenty-eighth specific embodiment relates to a brazing filler metal that is free from cadmium and phosphorus and comprises, aside from unavoidable impurities:
15.5 weight percent to 24 weight percent silver (Ag)
10 weight percent to 35 weight percent zinc (Zn)
6 weight percent to 19 weight percent manganese (Mn)
1 weight percent to 5 weight percent of at least two metals selected from the group consisting of Indium (In), Gallium (Ga) and Tin (Sn), wherein these metals comprised are being present in an amount of from 0.1 weight percent to 2 weight percent or from 1 weight percent to 2 weight percent each, the balance being copper and unavoidable impurities, and the percentages of all components adding up to 100 weight percent.

In addition, a twenty-ninth specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent
15 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a thirtieth specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
20 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a thirty-first specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
8 weight percent to 15 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a thirty-second specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
9 weight percent to 12 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a thirty-third specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn)
1 weight percent to 4 weight percent of a metal selected from the group consisting of Indium (In), Gallium (Ga), Tin (Sn) and combinations thereof, and unavoidable impurities, and the percentages of all components adding up to 100 weight percent;
   Or
A thirty-fourth specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn)
1 weight percent to 5 weight percent of at least two metals selected from the group consisting of Indium (In), Gallium (Ga) and Tin (Sn), wherein the metals comprised are being present in an amount of from 0.1 weight percent to 2 weight percent or from 1 weight percent to 2 weight percent and unavoidable impurities, and the percentages of all components adding up to 100 weight percent;
   or
a thirty-fifth specific embodiment relates to a brazing filler metal that is free from cadmium and phosphorus and comprises:
15.5 weight percent to 24 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
20 weight percent to 25 weight percent zinc (Zn)
9 weight percent to 12 weight percent manganese (Mn)
1 weight percent to 4 weight percent of a metal selected from the group consisting of Indium (In), Gallium (Ga), Tin (Sn) and combinations thereof, and unavoidable impurities, and the percentages of all components adding up to 100 weight percent.

Thus, a thirty-sixth specific embodiment relates to a brazing filler metal that is free from cadmium and phosphorus and comprises:
15.5 weight percent to 21 weight percent silver (Ag)
15 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a thirty-seventh specific embodiment relates to a brazing filler metal that is free from cadmium and phosphorus and comprises:
15.5 weight percent to 21 weight percent silver (Ag)
20 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 15.5 weight percent to 21 weight percent, the manganese content is more than 8 weight percent, and the percentages of all components adding up to 100 weight percent;
   Or
a thirty-eighth specific embodiment relates to a brazing filler metal that is free from cadmium and phosphorus and comprises:
15.5 weight percent to 21 weight percent silver (Ag)
10 weight percent to 35 weight percent zinc (Zn)
9 weight percent to 12 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a thirty-ninth specific embodiment relates to a brazing filler metal that is free from cadmium and phosphorus and comprises:
15.5 weight percent to 21 weight percent silver (Ag)
10 weight percent to 35 weight percent zinc (Zn)
6 weight percent to 19 weight percent manganese (Mn)
1 weight percent to 4 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
a fortieth specific embodiment relates to a brazing filler metal that is free from cadmium and phosphorus and comprises, aside from unavoidable impurities:
15.5 weight percent to 21 weight percent silver (Ag)
10 weight percent to 35 weight percent zinc (Zn)
6 weight percent to 19 weight percent manganese (Mn)
1 weight percent to 5 weight percent of at least two metals selected from the group consisting of Indium (In), Gallium (Ga) and Tin (Sn), wherein these metals comprised are being present in an amount of from 0.1 weight percent to 2 weight percent or from 1 weight percent to 2 weight percent each, the balance being copper and unavoidable impurities, and the percentages of all components adding up to 100 weight percent.

In addition, a forty-first specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent 15 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a forty-second specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
20 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a forty-third specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
8 weight percent to 15 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a forty-fourth specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
9 weight percent to 12 weight percent manganese (Mn)
0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
a forty-fifth specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn)
1 weight percent to 4 weight percent of a metal selected from the group consisting of Indium (In), Gallium (Ga), Tin (Sn) and combinations thereof, and unavoidable impurities, and the percentages of all components adding up to 100 weight percent;
   Or
A forty-sixth specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn)
1 weight percent to 5 weight percent of at least two metals selected from the group consisting of Indium (In), Gallium (Ga) and Tin (Sn), wherein the metals comprised are being present in an amount of from 0.1 weight percent to 2 weight percent or from 1 weight percent to 2 weight percent and unavoidable impurities, and the percentages of all components adding up to 100 weight percent;
   or
a forty-seventh specific embodiment relates to a brazing filler metal that is free from cadmium and phosphorus and comprises:
15.5 weight percent to 21 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
20 weight percent to 25 weight percent zinc (Zn)
9 weight percent to 12 weight percent manganese (Mn)
1 weight percent to 4 weight percent of a metal selected from the group consisting of Indium (In), Gallium (Ga), Tin (Sn) and combinations thereof, and unavoidable impurities, and the percentages of all components adding up to 100 weight percent.

The twenty-fourth to forty-seventh embodiment described above each may contain indium, gallium or mixtures thereof instead of Indium (In), Gallium (Ga), Tin (Sn) and combinations thereof, i.e. they may be free of tin, except of unavoidably impurities of tin, thus resulting in additional specific embodiments, which are the forty-eighth embodiment to the ninety-fifth embodiment that are identical to the first to forty-seventh embodiment described above, with the exception that they each comprise, (instead of Indium (In), Gallium (Ga), Tin (Sn) and combinations thereof) gallium, indium or combinations thereof in an amount of 1 weight percent to 5 weight percent, or in an amount of 1 to 4 weight percent, or in an amount of 1 to 4 weight percent or in an amount of 1 to 3 weight percent, thus being free of tin except from unavoidable impurities.

In addition, the twenty-fourth to forty-seventh embodiment described above each may contain a sixth element selected from the group consisting of silicon, nickel, germanium, lithium, antimony, iron, cobalt, titanium or combinations thereof. Thus, the present patent application also relates to the further specific embodiments. The 96th specific embodiment to the 144th specific embodiment are identical to the first to forty-seventh embodiment, wherein these 96th to 144th embodiment each further comprises a metal of the group consisting of silicon, antimony, titanium, lithium, germanium, nickel, iron or cobalt being present in an amount of 0.05 weight percent to 6 weight percent, the percentages of all components adding up to 100 weight percent, and wherein more specifically
nickel being present in an amount 0.001 weight percent to 6 weight percent, or 0.01 weight percent to 5 weight percent; or from 0.05 weight percent to 4 weight percent; or from 0.05 weight percent to 3 weight percent; or from 0.05 weight percent to 2 weight percent; or from 0.1 weight percent to 1 weight percent; or from 0.1 weight percent to 0.5 weight percent; or
titanium being present in an amount of from 0.01 weight percent to 5 weight percent, in particular 0.05 weight percent to 3 weight percent; or from 0.05 weight percent to 1.5 weight percent; or from 0.1 weight percent to 1 weight percent; or from 0.1 weight percent to 0.75 weight percent; or from 0.1 weight percent to 0.5 weight percent; or from 0.1 weight percent to 0.3 weight percent; or
antimony being present in an amount of from 0.01 weight percent to 5 weight percent, or 0.05 weight percent to 2 weight percent; or from 0.05 weight percent to 1 weight percent; or from 0.05 weight percent to 0.5 weight percent; or from 0.05 weight percent to 0.3 weight percent; or from 0.05 weight percent to 0.15 weight percent; or
iron being present in an amount of from 0.001 weight percent to 5 weight percent, or from 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3 weight percent; or
cobalt being present in an amount of from 0.001 weight percent to 5 weight percent, or 0.01 weight percent to 2 weight percent; or from 0.05 weight percent to 1 weight percent; or from 0.05 weight percent to 0.8 weight percent; or from 0.05 weight percent to 0.5 weight percent; or from 0.05 weight percent to 0.3; or
germanium being present in an amount of from 0.01 weight percent to 3 weight percent, or 0.05 weight percent to 2 weight percent; or from 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent; or lithium being present in an amount of from 0.001 weight percent to 2 weight percent, or 0.01 weight percent to 1 weight percent; or from 0.01 weight percent to 0.8 weight percent; or from 0.01 weight percent to 0.5 weight percent; or from 0.01 weight percent to 0.4 weight percent; or from 0.01 weight percent to 0.2 weight percent; or
silicon being present in an amount of from 0.01 weight percent to 2 weight percent, or 0.05 weight percent to 1 weight percent; or from 0.05 weight percent to 0.8 weight percent; or from 0.05 weight percent to 0.5 weight percent; or from 0.1 weight percent to 0.45 weight percent; or from 0.15 weight percent to 0.45 weight percent; or from 0.2 weight percent to 0.4 weight percent.

The brazing filler metals can be attained by liquid phase alloying or mechanical alloying. One common way is by melting. The brazing filler metals of the present patent application can be made by melting the appropriate amounts of the metals. It is also possible to employ alloys as educts, e.g. to use an alloy consisting of silver, copper and zinc and to supplement the alloy with appropriate amounts of manganese and tin or an alloy thereof and melting of this combination. The melting can be done in inert gas atmosphere, such as argon or nitrogen, or in air. Gas, electric and induction furnaces are, amongst others, suitable means to provide the necessary heating. The molten alloy can be cast into a mold, atomized or granulated to obtain a powder or granules. Atomized powder may be used for making brazing pastes. The powders as well as the granules may be used for pressing and extrusion as described below. In this way, also powders and granules can be employed to obtain punching stamped parts, wires or rods.

Melting can thus also be followed by production techniques such as ingot casting, continuous casting, melt spinning, alloy granulation or atomization.

The ingot may also be used for extruding the brazing filler metal in the shape of a wire or ribbon.

The geometry of the semi-finished products can be adjusted to customers demand by extrusion, pressing, forging, wire drawing, hot or cold rolling, straightening, cutting or punching or combinations thereof.

Continuous casting is also an option for obtaining wires, ribbons or rods.

Moreover, rolling to obtain sheet metal from the brazing filler metal, wire drawing or manufacture of shaped articles such as rings or punching stamped parts can be applied to obtain the brazing filler metal in the desired shape.

The brazing filler metal can also be used for Sandwich brazing filler metals or Sandwich brazing alloys or tri-ply or trifoil, which are all synonyms for a metal ribbon covered with layers of brazing filler metal on both of its sides, which are known in the art.

It is also known in the art how such sandwich brazing filler metals can be made, for example by hot roll cladding or roll cladding, Composite casting, which basically is a technique wherein the molten brazing filler metal is applied onto a metal ribbon and allowed to solidify or roller coating, wherein a paste or suspension of a brazing filler metal powder is being applied onto a metal ribbon and heat treated to effect evaporation and burning off solvents and organic constituents and sintering or melting of the brazing powder.

In Figure 1, the structure of such a sandwich brazing filler metal is depicted. A metal ribbon 3 carries a first brazing filler metal 1 and a second brazing filler metal 2 on both sides of the metal ribbon. Both as the first brazing filler metal 1 and as the second brazing filler metal 2 a brazing filler metal as described herein may be employed. It is also possible that the first brazing filler metal 1 and the second brazing filler metal 2 are different from each other and each may be a brazing filler metal as described herein. In the alternative, one of the brazing filler metal can also be a brazing filler metal of the prior art as long as the other one is a brazing filler metal as described.

The metal ribbon can be made of any metal suitable for this purpose, like steel, iron, copper, Nickel and their alloys but other metals can be suitable as well. Copper ribbon is commonly used in sandwich brazing filler metals as the metal ribbon. The thickness of the metal ribbon can be expressed by the ratio of the thickness of the metal ribbon versus the thickness of a single layer of the brazing filler metal. Typical ratios are 4:1, 1:1, 2:1, 1:0.85, 1:0.28. Overall Thickness of such a sandwich brazing filler metal may vary by the technical requirements of the application and can typically provided in thicknesses of 0.1 mm to 1.5 mm or 0.2 mm to 1.2 mm.

The brazing filler metal is suitable for brazing of metal parts, such as parts made of steel, stainless steels, copper and its alloys (i.e. brass) or nickel and its alloys, to parent materials that are usually made of steel, stainless steels, copper and its alloys (i.e. brass) or nickel and its alloys. Examples for applications are heat exchangers, compressors, heat pumps. Thus the present patent application also relates to the use of the brazing filler metals for brazing parts made of steel, stainless steels, copper and its alloys (i.e. brass) or nickel and its alloys or combinations thereof to a parent material made of steel, stainless steels, copper and its alloys (i.e. brass) or nickel and its alloys or combinations thereof.

The brazing filler metals are also suitable for brazing contact materials, such as nickel-chromium alloys, Copper-Chromium alloys, copper or silver composite materials, to parent materials made of, for example, copper and its alloys (i.e. brass) or steel. Consequently, the present patent application also relates to the use of the brazing filler metals for brazing nickel-chromium alloys, Copper-Chromium alloys, copper or silver composite materials to parent materials made of brass, copper, steel or combinations thereof.

The brazing filler metals are also suitable for brazing of hard metals. Hard metals are made of a hard material such as tungsten carbide, WC, often in the form of a powder that has been infiltrated by a binder metal like iron, nickel, cobalt or alloys thereof. In such applications, usually steel, hard metal, diamond, diamond segments or poly crystalline diamonds are joined with hard metal. Such brazing can be used for making hard metal saw blades, milling tools, drill bits or medical instruments.

The present patent application thus also relates to the use of the brazing filler metals for brazing hard metals to steel (especially tool steel), hard metals, diamond or combinations thereof and also to the use of the brazing filler metals for making hard metal saw blades, milling tools, drill bits or medical instruments as well as hard metal saw blades, milling tools, drill bits or medical instruments obtained in that way.

The brazing of steel is often employed for hydraulic tubes and brake pipes. The brazing filler metals are also suitable for other materials and applications, such as brazing of stainless steel, for example spectacle frames.

In general, known fluxes suitable for the materials mentioned above can be used in the form of pastes, laquers, powders or coating of the brazing filler metal e.g. in the shape of wires or rods. Such suitable fluxes are, for example, FH10, FH11 and FH12, which are disclosed in standard DIN EN 1045. Consequently, this patent application also relates to shaped articles made of any of the brazing filler metals in combination with fluxes. These can be in the shape of wires or rods. The shaped articles made of any of the brazing filler metals can be coated with a flux. More specifically, shaped articles made of any of the brazing filler metals in the form of rods or wires may be coated by a flux selected from FH10, FH11 or FH12 as defined in standard DIN EN 1045.

The brazing with the brazing filler metal of the present patent application can be carried out as set out in the following method for joining metal parts by brazing, comprising the steps of
- Providing a parent material;
- Providing a part that is to be connected to the parent material;to be discussed
- Arranging the parent material and the part to one another in a way suitable for brazing;
- Arranging a brazing filler metal of the present patent application or a combination of it with a flux in contact to the parent material, the part or both in a way suitable for brazing;
- Heat treating the arrangement at a temperature sufficient to effect brazing to obtain a joined part;
- Cooling the joined part.

The part to be brazed can be made of various materials described above, for example steel, stainless steels, copper and its alloys (i.e. brass), nickel and its alloys, nickel-chromium alloys, Copper-Chromium alloys, copper or silver composite materials, hard metals. The parent material can, for example, be selected from steel, stainless steels, tool steel, copper and its alloys (i.e. brass), nickel and its alloys, hard metals, diamond or combinations thereof. Both the part and the parent material may have various shapes and dimensions that can be the same or different from each other. The composition of material they are made of is described above. Possible shapes both for the parent material and the part are, amongst others, tubular, flat or angular. It is also possible to employ various numbers of the part and the parent material, so that for example several parts, like e.g. a number of tubes, can be joined with one parent material, such as e.g. a perforated metal sheet, or vice versa. These are arranged in contact with each other in such a way that they can be joined by brazing. A brazing filler metal, which can be in combination with a flux, is arranged on the parent material, the part or both. This can be done prior to providing them, e.g. by applying a paste containing a brazing filler metal of the present patent application to each or both of them, or it can be applied continuously during the heat treatment step or it can be placed on the parent material or the part e.g. as a ring made of a wire of the brazing filler metal of the present patent application. The flux can be applied prior or simultaneously with the brazing filler metal. A rod made of the brazing filler metal of the present patent application coated with a flux is a possible means for simultaneous application of the flux with the brazing filler metal, but the part, the parent material or both can be provided with the flux before as well, e.g. by applying a liquid containing the flux.

Heat treatment can be done by heating with a flame, in a furnace, by means of induction or in another way. Inert gas such as carbon dioxide, nitrogen or argon can be applied as considered useful, but brazing may as well be carried out in air or in vacuum. After the heat treatment step the joined parts are allowed to cool. The present patent application thus also relates to the method for joining metal parts as described above and to the brazed article obtained by such a method.

### Examples

Alloys have been obtained by providing the single metals in a crucible and molten in an induction furnace, cast into a graphite mold. These samples were used for the assessment of the produced alloys.

| Examples | | **Cold deformability** | **Liquidus temperature** | **Wetting/ Flow behaviour on steel** |
|---|---|---|---|---|
| 69 | Cu-Ag24-Zn25-Mn10-Sn2 | + | TL ≈ TL(Ag134) | + |
| 70 | Cu-Ag23-Zn20-Mn10-Sn2-In2 | ++ | TL ≈ TL(Ag134) | + |
| 71 | Cu-Ag24-Zn20-Mn10-Sn2-Si0.4 | ++ | TL ≈ TL(Ag134) | ++ |
| 72 | Cu-Ag24-Zn20-Mn10-Sn2-Si0.3 | ++ | TL ≈ TL(Ag134) | ++ |
| 73 | Cu-Ag24-Zn20-Mn10-Sn2-Si0.2 | ++ | TL ≈ TL(Ag134) | ++ |
| 74 | Cu-Ag24-Zn20-Mn10-Sn2-Ti0.5 | + | TL ≈ TL(Ag134) | ++ |
| 75 | Cu-Ag24-Zn20-Mn10-Sn2-Ge0,2 | + | TW ≈ TW(Ag134) | + |
| 76 | Cu-Ag24-Zn20-Mn10-Sn2-Ge0,4 | + | TW ≈ TW(Ag134) | + |
| 77 | Cu-Ag24-Zn20-Mn10-In2-Si0,3 | ++ | TW ≈ TW(Ag134) | + |
| 78 | Cu-Ag24-Zn20-Mn10-In2-Si0,2 | ++ | TW ≈ TW(Ag134) | + |
| 79 | Cu-Ag24-Zn20-Mn10-In2-Ge0,2 | + | TW ≈ TW(Ag134) | + |
| 80 | Cu-Ag24-Zn20-Mn10-Ga2-Si0,3 | + | TW ≈ TW(Ag134) | + |
| 81 | Cu-Ag24-Zn20-Mn10-Ga2-Si0,2 | + | TW ≈ TW(Ag134) | + |
| 82 | Cu-Ag24-Zn20-Mn10-Ga2-Ge0,2 | + | TW ≈ TW(Ag134) | + |
| 83 | Cu-Ag24-Zn20-Mn10-Sn2-Li0.3 | + | TW ≈ TW(Ag134) | + |
| 84 | Cu-Ag24-Zn20-Mn10-Sn2-Li0.2 | ++ | TW ≈ TW(Ag134) | + |
| 85 | Cu-Ag24-Zn20-Mn10-Sn2-Li0.1 | ++ | TW ≈ TW(Ag134) | + |
| 86 | Cu-Ag24-Zn20-Mn10-Sn2-Ti0.1 | ++ | TW ≈ TW(Ag134) | + |
| 87 | Cu-Ag24-Zn20-Mn10-Sn2-Ti0.5 | + | TW ≈ TW(Ag134) | + |
| 88 | Cu-Ag20-Zn25-Mn10-In2-Si0,1 | ++ | TW ≈ TW(Ag130) | + |
| 89 | Cu-Ag20-Zn25-Mn10-In2-Si0,2 | ++ | TW ≈ TW(Ag130) | ++ |
| 90 | Cu-Ag20-Zn25-Mn10-In2-Si0,3 | ++ | TW ≈ TW(Ag130) | ++ |
| 91 | Cu-Ag20-Zn25-Mn10-In2-Si0,4 | ++ | TW ≈ TW(Ag130) | ++ |
| 92 | Cu-Ag20-Zn25-Mn10-In2-Ge0,2 | + | TW ≈ TW(Ag130) | + |
| 93 | Cu-Ag20-Zn25-Mn10-In2-Ge0,3 | + | TW ≈ TW(Ag130) | + |
| 94 | Cu-Ag20-Zn25-Mn10-Sn2-Si0,2 | + | TW ≈ TW(Ag130) | + |
| 95 | Cu-Ag20-Zn25-Mn10-Sn2-Ge0,2 | + | TW ≈ TW(Ag130) | + |
| 96 | Cu-Ag20-Zn20-Mn10-Ga3-Si0,2 | + | TW ≈ TW(Ag130) | + |
| 97 | Cu-Ag16-Zn20-Mn10-Sn2 | + | TL ≈ TL(Ag225) | + |
| 98 | Cu-Ag16-Zn20-Mn10-Ga2-Si0.3 | + | TL ≈ TL(Ag225) | + |
| 99 | Cu-Ag16-Zn20-Mn10-Sn2-Si0.3 | + | TL ≈ TL(Ag225) | + |
| 100 | Cu-Ag16-Zn20-Mn10-Ga2 | ++ | TL ≈ TL(Ag225) | + |

**Comparative Examples**

| | | | | |
|---|---|---|---|---|
| 101 | Cu-Ag45-Zn20-Mn10-Sn7 | - | TL < TL(Ag155) | + |
| 102 | Cu-Ag45-Zn20-Mn10-In7 | - | TL < TL(Ag155) | ○ |
| 103 | Cu-Ag45-Zn20-Mn20-Sn2 | ○ | TL > TL(Ag155) | - |
| 104 | Cu-Ag45-Zn20-Mn3-Sn2 | ++ | TL >> TL(Ag155) | ++ |
| 105 | Cu-Ag45-Zn40-Mn10-Sn2 | - | TL < TL(Ag155) | + |
| 106 | Cu-Ag45-Zn5-Mn10-Sn2 | ++ | TL >> TL(Ag155) | + |
| 107 | Cu-Ag45-Zn20-Mn10 | ++ | TL > TL(Ag155) | + |
| 108 | Cu-Ag35-Zn20-Mn10-Sn7 | - | TL < TL(Ag145) | + |
| 109 | Cu-Ag35-Zn20-Mn10-In7 | - | TL < TL(Ag145) | ○ |
| 110 | Cu-Ag35-Zn20-Mn20-Sn2 | ○ | TL > TL(Ag145) | - |
| 111 | Cu-Ag35-Zn20-Mn3-Sn2 | ++ | TL >> TL(Ag145) | ++ |
| 112 | Cu-Ag35-Zn40-Mn10-Sn2 | - | TL < TL(Ag145) | + |
| 113 | Cu-Ag35-Zn5-Mn10-Sn2 | ++ | TL >> TL(Agl45) | + |
| 114 | Cu-Ag35-Zn20-Mn10 | ++ | TL > TL(Ag145) | + |
| 115 | Cu-Ag24-Zn20-Mn10-Sn7 | - | TL < TL(Ag134) | + |
| 116 | Cu-Ag24-Zn20-Mn10-In7 | - | TL < TL(Ag134) | ○ |
| 117 | Cu-Ag24-Zn20-Mn20-Sn2 | ○ | TL > TL(Ag134) | - |
| 118 | Cu-Ag24-Zn20-Mn3-Sn2 | ++ | TL >> TL(Ag134) | ++ |
| 119 | Cu-Ag24-Zn40-Mn10-Sn2 | - | TL < TL(Ag134) | + |
| 120 | Cu-Ag24-Zn05-Mn10-Sn2 | ++ | TL >> TL(Ag134) | + |
| 121 | Cu-Ag24-Zn20-Mn10 | ++ | TL > TL(Ag134) | + |
| 122 | Cu-Ag16-Zn20-Mn10-Sn7 | - | TL < TL(Ag225) | + |
| 123 | Cu-Ag16-Zn20-Mn10-In7 | - | TL < TL(Ag225) | ○ |
| 124 | Cu-Ag16-Zn20-Mn20-Sn2 | ○ | TL > TL(Ag225) | - |
| 125 | Cu-Ag16-Zn20-Mn3-Sn2 | ++ | TL >> TL(Ag225) | ++ |
| 126 | Cu-Ag16-Zn20-Mn10 | ++ | TL > TL(Ag225) | + |
| 127 | Cu-Ag20-Zn25-Mn10-In2 | ++ | TW > TW(Ag130) | ○ |
| 128 | Cu-Ag20-Zn25-Mn10-In3 | ○ | TW ≈ TW(Ag130) | ○ |
| 129 | Cu-Ag20-Zn25-Mn10-In3-Si0,2 | - | TW ≈ TW(Ag130) | ++ |
| 130 | Cu-Ag20-Zn20-Mn10-In3-Si0,2 | ○ | TW ≈ TW(Ag130) | ++ |
| 131 | Cu-Ag20-Zn20-Mn10-In2-Si0,2 | ++ | TW > TW(Ag130) | ++ |
| 132 | Cu-Ag20-Zn20-Mn10-In2 | ++ | TW >> TW(Ag130) | ○ |
| 133 | Cu-Ag20-Zn25-Mn5-In2-Si0,2 | ++ | TW >> TW(Ag130) | + |
| 134 | Cu-Ag20-Zn25-Mn10-In2-Si1 | ○ | TW < TW(Ag130) | ++ |
| 135 | Cu-Ag20-Zn30-Mn10-In2-Si0,2 | - | TW < TW(Ag130) | ++ |
| 136 | Cu-Ag20-Zn25-Mn10-Ga2-Si0,2 | - | TW ≈ TW(Ag130) | + |
| 137 | Cu-Ag20-Zn25-Mn10-Ga2-Ge0,2 | - | TW ≈ TW(Ag130) | + |

Cold deformability of the alloy was judged based on repeated deformation during cold rolling. Assessment was done by repeated rolling passes with a thickness reduction of 1 mm per pass without annealing until rupture of the sample was observed. The result is given in the Examples and Comparative Examples.

Wetting and flow behavior was judged based on a test where a 1 mm sheet made of steel or copper was placed on a 1mm sheet made of steel or copper orthogonally, a flux was applied to the joint and a wire made of the brazing filler metal was placed next to the joint and this arrangement was placed into a furnace for two minutes at various temperatures. The wetting and flow behavior at various temperatures and substrate materials were rated.

The ratings have the following meaning:

| | |
|---|---|
| ++ | very good |
| + | good |
| 0 | Bad |
| - | not acceptable |

Liquidus temperature was given relative to standardized brazing alloys disclosed in standard DIN EN ISO 17672. TL is the liquidus temperature of the respective brazing filler metal in the Examples and Comparative Examples, TL(AgXXX) is the liquidus temperature of the silver brazing filler metal with the identifier Ag and the number XXX in standard DIN EN ISO 17672.
≈ Liquidus temperature is 15°C higher or lower than corresponding standardized brazing filler metal
< Liquidus temperature is more than 15°C lower than corresponding standardized brazing filler metal
> Liquidus temperature is 15°C to 30 °C higher than corresponding standardized brazing filler metal
>> Liquidus temperature is more than 30 °C higher than corresponding standardized brazing filler metal

## Claims

1. A brazing filler metal that is free from cadmium and phosphorus, aside from unavoidable impurities, comprising 5 weight percent to 68.4 weight percent copper, from 15.5 weight percent to 24 weight percent silver, from 10 weight percent to 35 weight percent zinc, from 6 weight percent to 19 weight percent manganese, from 0.1 weight percent to 5 weight percent of at least one metal selected from the group consisting of Indium, Gallium, Tin and combinations thereof, and optionally comprising a metal of the group consisting of silicon, antimony, palladium, gold, iridium, rhodium, ruthenium, osmium, platinum, titanium, lithium, germanium, nickel, iron or combinations thereof in an amount of up to 6 weight percent in total of these metals, cobalt being optionally present in an amount of up to 2 weight percent, the balance being copper and unavoidable impurities.

2. The brazing filler metal of claim 1 or 2, comprising from 15.5 weight percent to 21 weight percent of silver.

3. The brazing filler metal of any of claims 1 to 2 comprising 1 weight percent to 4 weight percent of a metal selected from the group consisting of Indium, Gallium, Tin and combinations thereof.

4. The brazing filler metal of any of claims 1 to 3 comprising 1 to 5 weight percent of Indium, Gallium and combinations thereof and wherein tin is absent, except as unavoidable impurity.

5. The brazing filler metal of any of claims 1 to 4, containing antimony, germanium, lithium, silicon or cobalt in an amount of up to 2 weight percent.

6. The brazing filler metal of any of claims 1 to 4, further comprising one additional metal of the group consisting of silicon, antimony, titanium, lithium, germanium, nickel, iron or cobalt in an amount of from 0.05 weight percent to 6 weight percent.

7. The brazing filler metal of any of claims 1 to 6 comprising 15 weight percent to 25 weight percent of zinc.

8. The brazing filler metal of any of claims 1 to 7 comprising 7 weight percent to 15 weight percent of manganese.

9. The brazing filler metal of any of claims 1 to 7 comprising from 8 weight percent to 19 weight percent of manganese.

10. The brazing filler metal of any of claims 1 to 9, wherein the unavoidable impurities collectively do not exceed an amount of 0.5 weight percent.

11. The brazing filler metal of any of claims 1 to 4 and 6 to 10, further comprising a metal of the group consisting of palladium, gold, iridium, rhodium, ruthenium, Osmium, platinum, or combinations thereof.

12. The brazing filler metal of any of claims 1 to 11, further comprising silicon in an amount of up to 1 weight percent.

13. The brazing filler metal of any of claims 1 to 12, further comprising cobalt in an amount of up to 2 weight percent.

14. A sandwich brazing filler metal, comprising a brazing filler metal according to any of the preceding claims.

15. Use of the brazing filler metals according to any of the preceding claims for brazing parts made of steel, stainless steels, copper and its alloys (i.e. brass), nickel and its alloys, nickel-chromium alloys, Copper-Chromium alloys, copper or silver composite materials, hard metals or combinations thereof to a parent material made of steel, stainless steels, tool steel, copper and its alloys (i.e. brass), nickel and its alloys, hard metals, diamond or combinations thereof.

16. Use of the brazing filler metals according to any of the preceding claims for making hard metal saw blades, milling tools, drill bits, contact materials or medical instruments, heat exchangers, or compressors.

17. A combination of a brazing filler metal according to any of the preceding claims with a flux.

18. A method for joining metal parts by brazing, comprising the steps of
- Providing a parent material;
- Providing a part that is to be connected to the parent material;
- Arranging the parent material and the part to one another in a way suitable for brazing;
- Arranging a brazing filler metal of any of claims 1 to 13 or a combination of claim 17 in contact to the parent material, the part or both in a way suitable for brazing;
- Heat treating the arrangement at a temperature sufficient to effect brazing to obtain a joined part;
- Cooling the joined part.

19. A brazed article obtainable according to a method of claim 18.

## Patentansprüche

1. Hartlöt-Füllmetall, das neben unvermeidbaren Verunreinigungen frei von Cadmium und Phosphor ist, umfassend 5 Gewichtsprozent bis 68,4 Gewichtsprozent Kupfer, 15,5 Gewichtsprozent bis 24 Gewichtsprozent Silber, 10 Gewichtsprozent bis 35 Gewichtsprozent Zink, 6 Gewichtsprozent bis 19 Gewichtsprozent Mangan, 0,1 Gewichtsprozent bis 5 Gewichtsprozent wenigstens eines Metalls ausgewählt aus der Gruppe bestehend aus Indium, Gallium, Zinn und Kombinationen davon, und gegebenenfalls umfassend ein Metall aus der Gruppe bestehend aus Silicium, Antimon, Palladium, Gold, Iridium, Rhodium, Ruthenium, Osmium, Platin, Titan, Lithium, Germanium, Nickel, Eisen und Kombinationen davon in einer Menge von insgesamt bis zu 6 Gewichtsprozent dieser Metalle, wobei gegebenenfalls Cobalt in einer Menge von bis zu 2 Gewichtsprozent vorhanden ist, wobei der Rest Kupfer und unvermeidbare Verunreinigungen sind.

2. Hartlöt-Füllmetall gemäß Anspruch 1 oder 2, umfassend 15,5 Gewichtsprozent bis 21 Gewichtsprozent Silber.

3. Hartlöt-Füllmetall gemäß Anspruch 1 oder 2, umfassend 1 Gewichtsprozent bis 4 Gewichtsprozent eines Metalls ausgewählt aus der Gruppe bestehend aus Indium, Gallium, Zinn und Kombinationen davon.

4. Hartlöt-Füllmetall gemäß einem der Ansprüche 1 bis 3, umfassend 1 bis 5 Gewichtsprozent Indium, Gallium und Kombinationen davon, wobei kein Zinn vorhanden ist, außer als unvermeidbare Verunreinigung.

5. Hartlöt-Füllmetall gemäß einem der Ansprüche 1 bis 4, das Antimon, Germanium, Lithium, Silicium oder Cobalt in einer Menge von bis zu 2 Gewichtsprozent aufweist.

6. Hartlöt-Füllmetall gemäß einem der Ansprüche 1 bis 4, ferner umfassend ein zusätzliches Metall aus der Gruppe bestehend aus Silicium, Antimon, Titan, Lithium, Germanium, Nickel, Eisen und Cobalt in einer Menge von 0,05 Gewichtsprozent bis 6 Gewichtsprozent.

7. Hartlöt-Füllmetall gemäß einem der Ansprüche 1 bis 6, umfassend 15 Gewichtsprozent bis 25 Gewichtsprozent Zink.

8. Hartlöt-Füllmetall gemäß einem der Ansprüche 1 bis 7, umfassend 7 Gewichtsprozent bis 15 Gewichtsprozent Mangan.

9. Hartlöt-Füllmetall gemäß einem der Ansprüche 1 bis 7, umfassend 8 Gewichtsprozent bis 19 Gewichtsprozent Mangan.

10. Hartlöt-Füllmetall gemäß einem der Ansprüche 1 bis 9, wobei die unvermeidbaren Verunreinigungen gemeinsam die Menge von 0,5 Gewichtsprozent nicht übersteigen.

11. Hartlöt-Füllmetall gemäß einem der Ansprüche 1 bis 4 und 6 bis 10, ferner umfassend ein Metall aus der Gruppe bestehend aus Palladium, Gold, Iridium, Rhodium, Ruthenium, Osmium, Platin oder Kombinationen davon.

12. Hartlöt-Füllmetall gemäß einem der Ansprüche 1 bis 11, ferner umfassend Silicium in einer Menge von bis zu 1 Gewichtsprozent.

13. Hartlöt-Füllmetall gemäß einem der Ansprüche 1 bis 12, ferner umfassend Cobalt in einer Menge von bis zu 2 Gewichtsprozent.

14. Sandwich-Hartlöt-Füllmetall, umfassend ein Hartlöt-Füllmetall gemäß einem der vorstehenden Ansprüche.

15. Verwendung der Hartlöt-Füllmetalle gemäß einem der vorstehenden Ansprüche zum Hartlöten von Teilen aus Stahl, Edelstahl, Kupfer und seinen Legierungen (d. h. Messing), Nickel und seinen Legierungen, Nickel-Chrom-Legierungen, Kupfer-Chrom-Legierungen, Kupfer- oder Silber-Verbundwerkstoffe, Hartmetallen oder Kombinationen davon an einem Grundwerkstoff aus Stahl, rostfreien Stählen, Werkzeugstahl, Kupfer und seinen Legierungen (d. h. Messing), Nickel und seinen Legierungen, Hartmetallen, Diamant oder Kombinationen davon.

16. Verwendung der Hartlöt-Füllmetalle gemäß einem der vorstehenden Ansprüche zum Herstellen von Hartmetall-Sägeblättern, Mahlwerkzeugen, Bohrköpfen, Kontaktwerkstoffen oder medizinischen Instrumenten, Wärmetauschern und Kompressoren.

17. Kombination eines Hartlöt-Füllmetalls gemäß einem der vorstehenden Ansprüche mit einem Flussmittel.

18. Verfahren zum Verbinden von Metallteilen durch Hartlöten, umfassend die Schritte:
- Bereitstellen eines Grundmaterials;
- Bereitstellen eines Teils, der mit dem Grundmaterial verbunden werden soll;
- Anordnen des Grundmaterials und des Teils aneinander auf eine zum Hartlöten geeignete Weise;
- Anordnen eines Hartlöt-Füllmetalls gemäß einem der Ansprüche 1 bis 13 oder einer Kombination gemäß Anspruch 17 in Kontakt mit dem Grundmaterial, dem Teil oder beiden auf eine zum Hartlöten geeignete Weise;
- Wärmebehandeln der Anordnung bei einer Temperatur, die ausreicht, um Hartlösten zu bewirken, um ein verbundenes Teil zu erhalten;
- Abkühlen des verbundenen Teils.

19. Hartgelöteter Gegenstand, der gemäß einem Verfahren gemäß Anspruch 18 erhalten werden kann.

## Revendications

1. Métal d'apport pour brasage qui est exempt de cadmium et de phosphore, hormis les impuretés inévitables, comprenant 5 pour cent en poids à 68,4 pour cent en poids de cuivre, de 15,5 pour cent en poids à 24 pour cent en poids d'argent, de 10 pour cent en poids à 35 pour cent en poids de zinc, de 6 pour cent en poids à 19 pour cent en poids de manganèse, de 0,1 pour cent en poids à 5 pour cent en poids d'au moins un métal choisi dans le groupe constitué de l'indium, du gallium, de l'étain et des combinaisons de ceux-ci, et comprenant facultativement un métal du groupe constitué des silicium, antimoine, palladium, or, iridium, rhodium, ruthénium, osmium, platine, titane, lithium, germanium, nickel, fer ou des combinaisons de ceux-ci en une quantité allant jusqu'à 6 pour cent en poids du total de ces métaux, le cobalt étant facultativement présent en une quantité allant jusqu'à 2 pour cent en poids, le complément étant le cuivre et des impuretés inévitables.

2. Métal d'apport pour brasage de la revendication 1 ou 2, comprenant de 15,5 pour cent en poids à 21 pour cent en poids d'argent.

3. Métal d'apport pour brasage de l'une quelconque des revendications 1 à 2 comprenant 1 pour cent en poids à 4 pour cent en poids d'un métal choisi dans le groupe constitué de l'indium, du gallium, de l'étain et de combinaisons de ceux-ci.

4. Métal d'apport pour brasage de l'une quelconque des revendications 1 à 3 comprenant 1 à 5 pour cent en poids d'indium, de gallium et des combinaisons de ceux-ci et dans lequel l'étain est absent, à l'exception des impuretés inévitables.

5. Métal d'apport pour brasage de l'une quelconque des revendications 1 à 4, contenant de l'antimoine, du germanium, du lithium, du silicium ou du cobalt en une quantité allant jusqu'à 2 pour cent en poids.

6. Métal d'apport pour brasage de l'une quelconque des revendications 1 à 4, comprenant en outre un métal additionnel du groupe constitué des silicium, antimoine, titane, lithium, germanium, nickel, fer ou cobalt en une quantité de 0,05 pour cent en poids à 6 pour cent en poids.

7. Métal d'apport pour brasage de l'une quelconque des revendications 1 à 6 comprenant 15 pour cent en poids à 25 pour cent en poids de zinc.

8. Métal d'apport pour brasage de l'une quelconque des revendications 1 à 7 comprenant 7 pour cent en poids à 15 pour cent en poids de manganèse.

9. Métal d'apport pour brasage de l'une quelconque des revendications 1 à 7 comprenant de 8 pour cent en poids à 19 pour cent en poids de manganèse.

10. Métal d'apport pour brasage de l'une quelconque des revendications 1 à 9, dans lequel les impuretés inévitables, collectivement, ne dépassent pas une quantité de 0,5 pour cent en poids.

11. Métal d'apport pour brasage de l'une quelconque des revendications 1 à 4 et 6 à 10, comprenant en outre un métal du groupe constitué des palladium, or, iridium, rhodium, ruthénium, osmium, platine, ou des combinaisons de ceux-ci.

12. Métal d'apport pour brasage de l'une quelconque des revendications 1 à 11, comprenant en outre du silicium en une quantité allant jusqu'à 1 pour cent en poids.

13. Métal d'apport pour brasage de l'une quelconque des revendications 1 à 12, comprenant en outre du cobalt en une quantité allant jusqu'à 2 pour cent en poids.

14. Métal d'apport pour brasage en sandwich, comprenant un métal d'apport pour brasage selon l'une quelconque des revendications précédentes.

15. Utilisation des métaux d'apport pour brasage selon l'une quelconque des revendications précédentes pour le brasage de pièces constituées d'acier, d'aciers inoxydables, de cuivre et ses alliages (à savoir, le laiton), de nickel et ses alliages, d'alliages nickel-chrome, d'alliages cuivre-chrome, de matériaux composites de cuivre ou d'argent, de métaux durs ou de combinaisons de ceux-ci sur un matériau parent constitué d'acier, d'aciers inoxydables, d'acier à outils, de cuivre et ses alliages (à savoir le laiton), de nickel et ses alliages, de métaux durs, de diamant ou des combinaisons de ceux-ci.

16. Utilisation des métaux d'apport pour brasage selon l'une quelconque des revendications précédentes pour la fabrication de lames de scie en métaux durs, d'outils d'usinage, de trépans, de matériaux de contact ou d'instruments médicaux, d'échangeurs de chaleur ou de compresseurs.

17. Combinaison d'un métal d'apport pour brasage selon l'une quelconque des revendications précédentes avec un fondant.

18. Procédé d'assemblage de pièces métalliques par brasage, comprenant les étapes de
- fourniture d'un matériau parent ;
- fourniture d'une pièce qui doit être raccordée au matériau parent ;
- agencement du matériau parent et de la pièce l'un sur l'autre d'une manière adaptée pour le brasage ;
- agencement d'un métal d'apport pour brasage de l'une quelconque des revendications 1 à 13 ou d'une combinaison de la revendication 17 en contact avec le matériau parent, la pièce ou les deux d'une manière adaptée pour le brasage ;
- traitement thermique de l'agencement à une température suffisante pour effectuer un brasage pour obtenir une pièce assemblée ;
- refroidissement de la partie assemblée.

19. Article brasé pouvant être obtenu selon un procédé de la revendication 18.
